# EUROPÄISCHE PATENTSCHRIFT

(11) **EP 1 080 627 B1**
(45) Veröffentlichungstag und Bekanntmachung des Hinweises auf die Patenterteilung: **28.07.2004**
(21) Anmeldenummer: 00117779.9
(22) Anmeldetag: 18.08.2000
(51) Int. Cl.: A01F 15/07

(54) **Stelleinrichtung für Funktionselemente an einer Rollballenpresse**
Control unit for functional elements of a round baler
Dispositif de contrôle pour des éléments fonctionnels d'une presse à balles rondes

(30) Priorität: 01.09.1999 DE 19941604
(43) Veröffentlichungstag der Anmeldung: 07.03.2001
(73) Patentinhaber: Usines Claas France, 57141 Metz (FR)
(72) Erfinder: Roth, Arsène, 70100 Gray (FR); Guthmann, Peter, 57000 Metz (FR)
(74) Vertreter: Kus, Sascha

(56) Entgegenhaltungen:
- EP-A- 0 364 042
- FR-A- 2 509 121
- US-A- 4 545 298
- US-A- 5 598 690

## Beschreibung

Die Erfindung bezieht sich auf eine Stelleinrichtung für Funktionselemente an einer Rollballenpresse für landwirtschaftliches Emtegut nach dem Oberbegriff des Patentanspruches 1. Eine solche Rollballenpresse ist aus US-A-4 545 298 bekannt. An Rollballenpressen sind zur Betätigung von Funktionselementen bereits verschiedene, zumeist hydraulisch gesteuerte Vorrichtungen bekannt.

So werden beispielsweise für das Schwenken der Heckklappe in die Ballenabgabestellung und in die Preßstellung sowie für die Betätigung der Verriegelungseinrichtung für die Heckklappe und für die Verstellung des Spannarmes für die umlaufenden Bänder Hydraulikzylinder mit den zugeordneten Steuerungseinrichtungen verwendet, die im Wesentlichen doppelseitig außen an den Seitenwänden des vorderen Gehäuses angeordnet sind. Da überwiegend für jeden einzelnen Verstellzweck ein separater Hydraulikzylinder (DE 39 41 707 A1) eingesetzt wird, beziehungsweise konstruktiv aufwendige Kombinationen für mehrere Stellfunktionen durch einen Hydraulikzylinder (DE 31 18 663 C2) Anwendung finden, verursachen diese Ausführungen einen hohen Herstellungsaufwand.

Auch bei der aus der EP 0 130 258 B1 bekannten Rollballenpresse mit einem feststehenden Gehäuseteil und einer daran schwenkbar befestigten Heckklappe sowie am Umfang der Presskammer angeordneten umlaufenden Bändern, deren Verlauf über an einem Spannarm angeordneten Umlenkrollen dem Rollballendurchmesser angepaßt wird, erfolgt das Schwenken der Heckklappe und des Spannarms über einen gemeinsamen Hydraulikzylinder, der mit beiden Bauteilen und einer zugehörigen hydraulischen Steuerungseinrichtung in Verbindung steht. Da hierbei jedoch keine Verriegelungseinrichtung zwischen der Heckklappe und dem vorderen Gehäuse vorhanden ist, eignet sich diese Ausführung nicht für Ballenpressen mit einer regelbaren Preßdichte und einer hohen Leistung.

Der Erfindung liegt die Aufgabe zugrunde, die Stelleinrichtung für mehrere Funktionselemente r so auszuführen, daß sowohl der erforderliche Herstellungsaufwand verringert als auch eine hohe Funktionssicherheit und Leistungsfähigkeit erreicht wird.

Erfindungsgemäß wird diese Aufgabe durch die im Patentanspruch 1 genanrten Merkmale gelöst. Weitere vorteilhafte Ausführungen des Erfindungsgegenstandes ergeben sich aus den nachgeordneten Ansprüchen.

Durch die erfindungsgemäße Verbindung beziehungsweise Kombination von Funktionen und Bewegungsabläufen wird die Anzahl der für die Betätigung von verschiedenen Funktionselementen erforderlichen Hydraulikzylinder verringert und dadurch der Kostenaufwand für die Herstellung der Stelleinrichtung wesentlich gesenkt.

Die Erfindung wird nachstehend in einem Ausführungsbeispiel näher erläutert. In der zugehörigen Zeichnung zeigen:

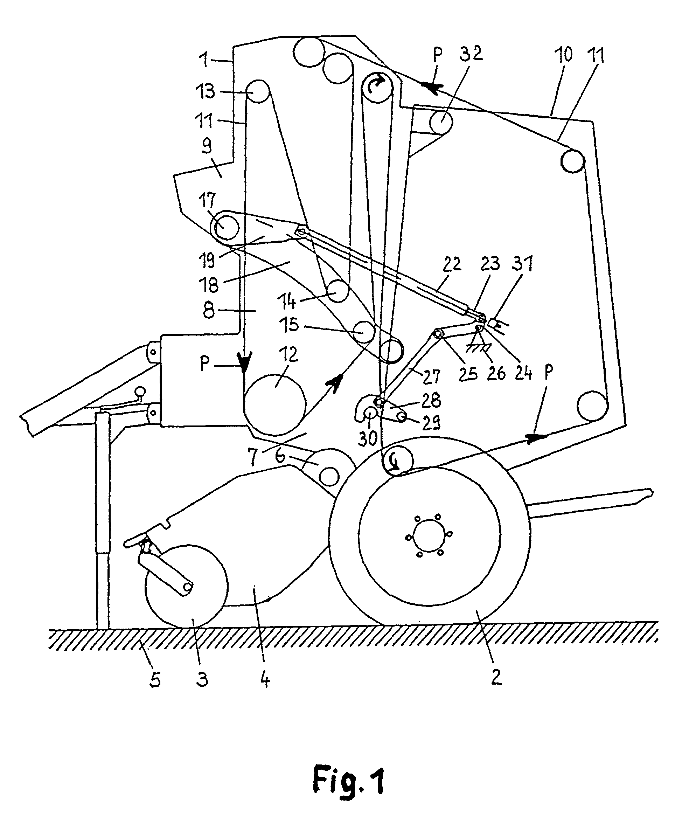

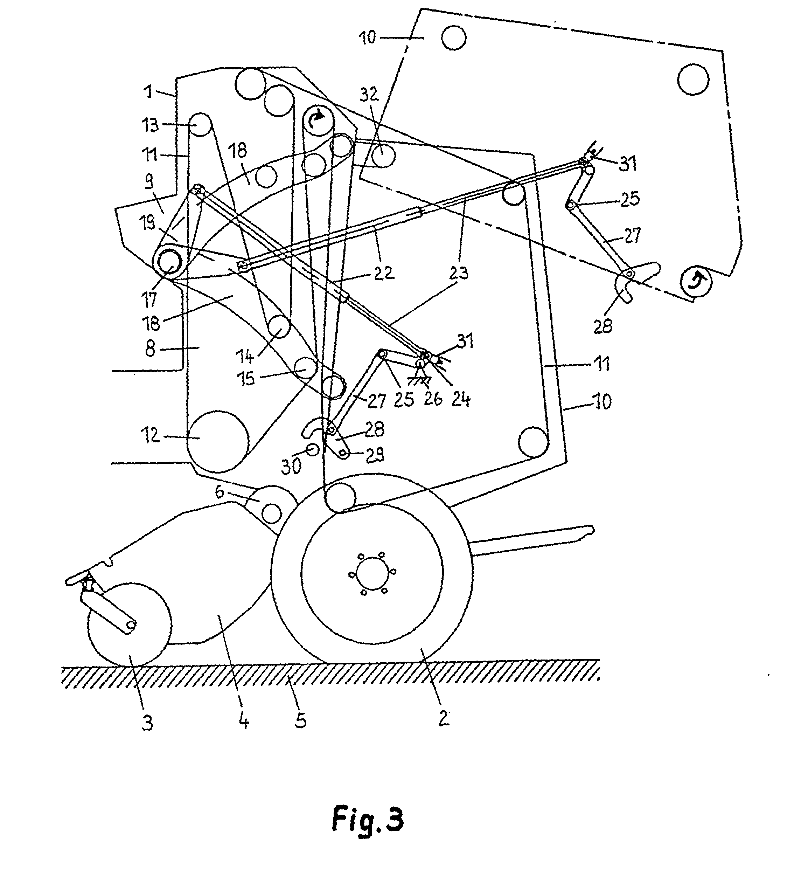

- Figur 1: eine schematische Längsschnittdarstellung einer Rollballenpresse in der Ausgangsstellung vor dem Preßvorgang;

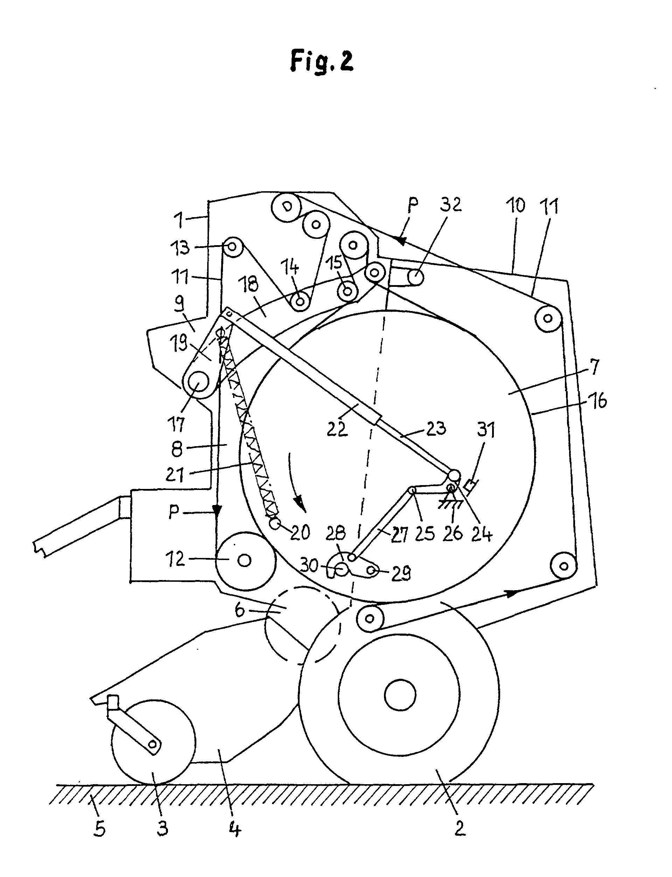

- Figur 2: die Rollballenpresse im Längsschnitt mit einem Rollballen kurz vor dem Erreichen seiner Endgröße;
- Figur 3: die Rollballenpresse im Längsschnitt nach Beendigung des Preßvorganges und gelöster Verriegelung für die Heckklappe, wobei die nach oben geschwenkte Stellung der Heckklappe mit Strich-Punkt-Linien dargestellt ist.

Die Rollballenpresse 1 wird von einem in der Zeichnung nicht dargestellten Zugfahrzeug gezogen und deren Funktionselemente über mechanische und hydraulische Antriebsmittel von diesem angetrieben. Über eine vor den Laufrädern 2 angeordnete und mittels Stützrädern 3 geführte Aufnehmertrommel 4 wird das in Schwaden auf dem Feldboden 5 abgelegte Erntegut aufgenommen und über eine nachgeordnete Förderwalze 6 dem Preßraum 7 zugeführt. Der Preßraum 7 ist von einem zweiteiligen Gehäuse umgeben, dessen vorderer Gehäuseteil 8 feststehend mit dem Pressenrahmen 9 verbunden ist und dessen hinterer Gehäuseteil als nach oben schwenkbare Heckklappe 10 ausgebildet ist. Innerhalb des Preßraumes 7 sind an dessen Umfang mehrere umlaufende flachriemenartige Bänder 11 nebeneinander angeordnet, die über mehrere Antriebswalzen 12, 13 und nicht angetriebene Umlenkwalzen 14, 15 geführt sind. Zur Anpassung der Spannung und den Verlauf der Bänder 11 an den sich während des Pressvorganges ändernden Durchmesser des Rollballens 16 sind seitlich am Pressenrahmen 9 an einer Schwenkachse 17 Spannarme 18 schwenkbar angeordnet, an denen mehrere Umlenkwalzen 14, 15 gelagert sind. Entsprechend dem sich vergrößernden Durchmesser des Rollballens 16 werden die Spannarme 18 um die Schwenkachse 17 nach oben geschwenkt und damit die Führung der Bänder 11 dem jeweiligen Umfang des Rollballens 16 angepaßt. Mit den Spannarmen 18 sind Schwenkarme 19 drehfest verbunden. Zwischen dem Schwenkarm 19 und einem festen Einhängepunkt 20 am Pressenrahmen 9 ist eine Zugfeder 21 angeordnet, die den Spannarm 18 am Preßbeginn in die untere Endlage zieht. Dadurch werden die Bänder 11 in die erforderliche Ausgangsposition für den Preßvorgang gebracht. Am freien Ende des Schwenkarms 19 ist ein Hydraulikzlinder 22 schwenkbeweglich befestigt. Die Kolbenstange 23 des Hydraulikzylinders 22 ist mit einem Arm 24 eines zweiarmigen Winkelhebels 25 verbunden. Der Winkelhebel 25 ist an einem an der Seitenwand der Heckklappe 10 angebrachten Lager 26 schwenkbar befestigt. Mit seinem anderen Arm 27 ist der Winkelhebel 25 mit einer Klinke 28 verbunden, die im unteren Bereich der Heckklappe 10 um eine Achse 29 schwenkbar angeordnet ist. Die Klinke 28 steht mit einem, am vorderen Gehäuseteil 8 angeordneten feststehenden Zapfen 30 in Verbindung. Dadurch wird während des Preßvorganges die Heckklappe 10 mit dem vorderen Gehäuseteil 8 fest verriegelt. Durch den sich im Verlauf des Pressens vergrößernden Durchmesser des Rollballens 16 und des dadurch bedingten Schwenkens des Spannarmes 18 nach oben erhöht sich auch entsprechend die auf die Klinke 28 wirkende Kraft, so daß bei der höchsten Belastung auch die größte Verriegelungskraft vorhanden und demzufolge unter allen Bedingungen stets eine sichere Verriegelung zwischen der Heckklappe 10 und dem vorderen Gehäuseteil gwährleistet ist. Nach dem Erreichen der Endgröße des Rollballens 16 wird durch die Beaufschlagung des Hydraulikzylinders 22 die Kolbenstange 23 ausgefahren und dadurch der Winkelhebel 25 bis zu einem unterhalb des Armes 24 des Winkelhebels 25 angeordneten festen Anschlag 31 geschwenkt. Dadurch wird die Klinke 28 nach oben gezogen und die Verriegelung gelöst. Daraufhin schwenkt die Heckklappe 10 durch die wirkende Stellkraft des Hydraulikzylinders 22 um die Schwenkachse 32 nach oben und der Rollballen 16 wird freigegeben und auf dem Feldboden 5 abgelegt. Nach der erfolgten Ablage des Rollballens 16 wird der Hydraulikzylinder 22 wieder beaufschlagt und durch das Einfahren der Kolbenstange 23 die Heckklappe 10 nach unten geschwenkt und die Bänder 11 damit wieder in die Ausgangsposition gebracht, so daß ein neuer Preßvorgang eines Rollballens 16 beginnen kann. Die Steuerung aller Funktionselemente erfolgt ausschließlich über den Hydraulikzylinder 22. Die Dreh- beziehungsweise Laufrichtungen der Walzen und Bänder 11 sind in der Zeichnung durch Pfeile P gekennzeichnet.

### Bezugszeichenliste

- 1: - Rollballenpresse
- 2: - Laufräder
- 3: - Stützräder
- 4: - Aufnehmertrommel
- 5: - Feldboden
- 6: - Förderwalze
- 7: - Preßraum
- 8: - vorderer Gehäuseteil
- 9: - Pressenrahmen
- 10: - Heckklappe
- 11: - Bänder
- 12, 13: - Antriebswalzen
- 14, 15: - Umlenkwalzen
- 16: - Rollballen
- 17: - Schwenkachse
- 18: - Spannarme
- 19: - Schwenkarme
- 20: - Einhängepunkt
- 21: - Zugfeder
- 22: - Hydraulikzylinder
- 23: - Kolbenstange
- 24: - Arm
- 25: - Winkelhebel
- 26: - Lager
- 27: - Arm
- 28: - Klinke
- 29: - Achse
- 30: - Zapfen
- 31: - Anschlag
- 32: - Schwenkachse
- P: - Pfeile

## Patentansprüche

1. Stelleinrichtung für Funktionselemente an einer Rollballenpresse (1), deren Preßraum (7) von einem zweiteiligen Gehäuse umgeben ist und dessen vorderer Gehäuseteil (8) fest mit dem Pressenrahmen (9) verbunden und dessen hinterer Gehäuseteil als schwenkbare Heckklappe (10) ausgebildet ist, wobei innerhalb des Preßraumes (7) im Umfangsbereich nebeneinander mehrere umlaufende flachriemenartige Bänder (11) bzw. rotierende Presswalzen oder miteinander kombinierte Bänder und Preßwalzen angeordnet sind, die durch Verschwenken eine variable Größe des Preßraumes (7) ermöglichen, wobei ein mit Umlenkwalzen (14) (15) und einen Schwenkarm (19) versehener Spannarm (18) über einen Hydraulikzylinder (22) schwenkbar am Pressenrahmen (9) angeordnet ist,
**dadurch gekennzeichnet,**
**daß** der Hydraulikzylinder (22) zwischen dem freien Ende des Schwenkarms (19) und einem Arm (24) eines an der Seitenwand der Heckklappe (10) schwenkbar gelagerten Winkelhebels (25) angeordnet ist und daß der andere Arm (27) des Winkelhebels (25) mit einer schwenkbaren Klinke (28) verbunden ist, die mit einem am vorderen Gehäuseteil (8) angeordneten feststehenden Zapfen (30) in Verbindung steht..

2. Stelleinrichtung nach Anspruch 1,
dadurch geken nzeichnet,
daß unterhalb des Armes (24) des Winkelhebels (25) ein fester Anschlag (31) angeordnet ist.

3. Stelleinrichtung nach Anspruch 1,
dadurch geken nzeichnet,
daß zwischen dem Schwenkarm (19) und einem festen Einhängepunkt (20) am Pressenrahmen (9) eine Zugfeder (21) angeordnet ist.

## Claims

1. A setting apparatus for functional elements on a roll bale press (1) whose pressing chamber (7) is surrounded by a two-part housing and whose front housing part (8) is fixedly connected to the press frame (9) and whose rear housing part is in the form of a pivotable tail flap (10), wherein arranged within the pressing chamber (7) in mutually juxtaposed relationship in the peripheral region are a plurality of circulating flat belt-like bands (11) or rotating pressing rollers or bands and pressing rollers which are combined together and which permit a variable size of the pressing chamber (7) by pivotal movement, wherein a tensioning arm (18) provided with deflection rollers (14), (15) and a pivot arm (19) is arranged on the press frame (9) pivotably by way of a hydraulic cylinder (22),
**characterised in that**
the hydraulic cylinder (22) is arranged between the free end of the pivot arm (19) and an arm (24) of an angle lever (25) mounted pivotably to the side wall of the tail flap (10) and that the other arm (27) of the angle lever (25) is connected to a pivotable pawl (28) which is connected to a stationary projection (30) arranged on the front housing part (8).

2. A setting apparatus according to claim 1 **characterised in that** a fixed abutment (31) is arranged beneath the arm (24) of the angle lever (25).

3. A setting apparatus according to claim 1 **characterised in that** a tension spring (21) is arranged between the pivot arm (19) and a fixed attachment point (20) on the press frame (9).

## Revendications

1. Dispositif de positionnement d'éléments fonctionnels d'une presse à balles rondes (1), dont la chambre de pressage (7) est entourée d'un corps en deux parties, dont la partie antérieure du corps (8) est solidaire du bâti de presse (9) et dont la partie postérieure prend la forme d'un capot arrière (10) basculant, plusieurs bandes rotatives (11) en forme de courroies plates ou plusieurs rouleaux de pressage rotatifs, ou des combinaisons de bandes et de rouleaux, étant juxtaposés à l'intérieur de la chambre de pressage (7) sur la périphérie de celle-ci et permettant ainsi par leur basculement une taille variable de la chambre de pressage (7), un bras tendeur (18) doté de galets de renvoi (14, 15) et d'un bras basculant (19) étant monté sur le bâti de presse (9) et basculé par un vérin hydraulique (22), **caractérisé en ce que** le vérin hydraulique (22) est disposé entre l'extrémité libre du bras basculant (19) et un bras (24) d'un levier coudé (25) monté pivotant sur la paroi latérale du capot arrière (10) et **en ce que** l'autre bras (27) du levier coudé (25) est relié à un loquet (28) basculant qui est relié à un tourillon (30) fixe monté sur la partie antérieure du corps (8).

2. Dispositif de positionnement selon la revendication 1, **caractérisé en ce qu'**une butée fixe (31) est disposée au-dessous du bras (254) du levier coudé (25).

3. Dispositif de positionnement selon la revendication 1, **caractérisé en ce qu'**un ressort de traction est placé entre le bras basculant (19) et un point d'accrochage (20) fixe sur le bâti de presse (9).
